# FASCICULE DE BREVET EUROPEEN

(11) **EP 0 485 264 B1**
(45) Date de publication et mention de la délivrance du brevet: **11.01.1995**
(21) Numéro de dépôt: 91402937.6
(22) Date de dépôt: 04.11.1991
(51) Int. Cl.: G01C 19/28

(54) **Système gyroscopique à mesure de l'inclinaison du plan des axes des cadres primaire et secondaire par rapport à l'axe de la toupie**
Kreiselsystem zum Vermessen der Neigung der Ebene der Achsen des Primaeren und des sekundären Rahmens in Bezug auf die Kreiselackse
Gyroscopic system to measure the inclination of the plane of the axes of the primary and secondary frames with respect to the axis of the top

(30) Priorité: 07.11.1990 FR 9013806
(43) Date de publication de la demande: 13.05.1992
(73) Titulaire: AEROSPATIALE Société Nationale Industrielle, 75781 Paris Cédex 16 (FR)
(72) Inventeur: Moutardier, Jacques, F-92350 Le Plessis Robinson (FR); Charrette, Gérard, F-91430 Igny (FR)
(74) Mandataire: Bonnetat, Christian

(56) Documents cités:
- EP-A- 0 068 914
- EP-A- 0 235 475
- GB-A- 2 149 500
- US-A- 4 361 760

## Description

La présente invention concerne un système gyroscopique grâce auquel on peut mesurer, avec une bonne résolution, l'inclinaison du plan défini par les axes de rotation des cadres primaire et secondaire par rapport à l'axe de rotation de la toupie.

Le système conforme à l'invention est avantageux en ce qu'il n'induit ni frottement, ni couple parasite. De plus, il ne nécessite pas la mise en place de contacts tournants.

Par exemple, par le document EP-A-0068914, on connaît déjà un système gyroscopique comprenant :
- une toupie ayant un centre et susceptible d'être entraînée en rotation autour d'un premier axe passant par ledit centre ;
- un cadre primaire sur lequel ladite toupie est montée de façon à pouvoir tourner autour dudit premier axe ;
- un cadre secondaire sur lequel ledit cadre primaire est monté de façon à pouvoir tourner autour d'un deuxième axe, passant par ledit centre de la toupie et perpendiculaire audit premier axe ;
- un boîtier, à l'intérieur duquel sont logés ladite toupie et lesdits cadres primaire et secondaire et sur lequel ledit cadre secondaire est monté de façon à pouvoir tourner autour d'un troisième axe, passant par ledit centre de la toupie et perpendiculaire audit deuxième axe ;
- des moyens d'éclairement, solidaires dudit boîtier, prévus pour former une tache lumineuse sur ladite surface extérieure sphérique de la toupie ;
- des moyens photosensibles, solidaires dudit boîtier, prévus pour observer ladite tache lumineuse formée par lesdits moyens d'éclairement ;
- des zones de réflectivité différentes, formées par des traits équidistants parallèles entre eux et audit premier axe et portées par la surface extérieure de ladite toupie qui, au moins au voisinage du plan défini par lesdits deuxième et troisième axes présente la forme d'une sphère centrée sur ledit centre ; et
- des moyens de comptage, associés auxdits moyens photosensibles, prévus pour compter le nombre des traits observés par lesdits moyens photosensibles au cours de la rotation de la toupie, ledit nombre étant représentatif de l'inclinaison du plan défini par lesdits deuxième et troisième axes par rapport audit premier axe.

La présente invention a pour objet de perfectionner un système gyroscopique de ce type, afin de pouvoir déterminer le sens d'inclinaison du boîtier.

A cette fin, selon l'invention, le système gyroscopique du type décrit ci-dessus est caractérisé en ce que :
- lesdits traits parallèles équidistants forment au moins un ensemble qui comporte au moins une partie dans laquelle la longueur desdits traits est successivement croissante et au moins une partie dans laquelle la longueur desdits traits est successivement décroissante ; et
- ledit ensemble de traits parallèles est disposé de façon que la partie médiane de celui desdits traits qui est le plus long se trouve au niveau de ladite tache lumineuse, lorsque le plan défini par les axes de rotation des cadres primaire et secondaire est perpendiculaire à l'axe de rotation de la toupie, déterminant ainsi une position de référence, de sorte que la variation dudit nombre de traits comptés par lesdits moyens de comptage, par rapport au nombre de traits correspondant à ladite position de référence, est représentative du sens d'inclinaison du plan desdits deuxième et troisième axes.

Ainsi, à cette position de référence des cadres et de la toupie, correspond un nombre initial déterminé de traits comptés par lesdits moyens de comptage. A partir de cette position de référence, toute inclinaison du plan des axes de rotation des cadres primaire et secondaire se traduira, pour un sens d'inclinaison, par une augmentation du nombre des traits, et pour l'autre sens d'inclinaison, par une diminution du nombre desdits traits. Ainsi, la variation du nombre des traits comptés à partir dudit nombre initial est significative du sens de basculement dudit boîtier.

On remarquera que dans le système gyroscopique conforme à la présente invention, chaque trait traversant la tache lumineuse est compté par lesdits moyens de comptage. Les signaux fournis sont donc des signaux de type numérique, compatibles en TTL, qui présentent l'avantage d'une bonne immunité au bruit et d'un excellent comportement en environnement électromagnétique.

De façon avantageuse, ledit cadre secondaire étant monté rotatif sur ledit boîtier par l'intermédiaire de moyeux définissant ledit troisième axe, au moins l'un desdits moyeux est creux et l'éclairement de ladite surface extérieure sphérique par lesdits moyens d'éclairement, ainsi que l'observation de ladite tache lumineuse par lesdits moyens photosensibles s'effectuent à travers un tel moyeu creux.

De préférence, lesdits moyens d'éclairement et lesdits moyens photosensibles sont regroupés en un unique détecteur disposé en regard d'un tel moyeu creux. Ce détecteur peut comporter un élément photoémetteur et un élément photosensible disposés à l'extérieur dudit moyeu creux et associés respectivement à des fibres optiques passant à travers ledit moyeu creux.

Avantageusement, l'augmentation ou la diminution de longueur d'un trait par rapport au précédent peut être constante.

Selon une utilisation avantageuse, le système gyroscopique conforme à la présente invention est destiné à détecter la position angulaire de l'axe du lacet ou de l'axe de tangage d'un aéronef par rapport à la verticale. A cet effet, ledit boîtier est fixé sur ledit aéronef de façon que ledit troisième axe de rotation du cadre secondaire par rapport audit boîtier soit confondu avec l'axe de roulis dudit aéronef.

Les figures du dessin annexé feront bien comprendre comment l'invention peut être réalisée. Sur ces figures, des références identiques désignent des éléments semblables.

La figure 1 montre un mode de réalisation du système gyroscopique selon l'invention, suivant un plan de coupe passant par l'axe de rotation de la toupie et par l'axe de rotation du cadre secondaire.

La figure 2 montre le système gyroscopique de la figure 1 suivant un plan de coupe passant par l'axe de rotation de la toupie et par l'axe de rotation du cadre primaire, cette figure 2 correspondant à la ligne II-II de la figure 1.

La figure 3 illustre la disposition des moyens d'éclairement de la toupie et des moyens photosensibles, par rapport à la toupie.

La figure 4 montre un exemple d'ensemble de traits constituant les moyens de codage de la toupie.

Les figures 5a, 5b et 5c sont des diagrammes illustrant le fonctionnement du système gyroscopique conforme à la présente invention.

La figure 6 donne le schéma synoptique d'un mode de réalisation des moyens électroniques exploitant les informations délivrées par les moyens photosensibles.

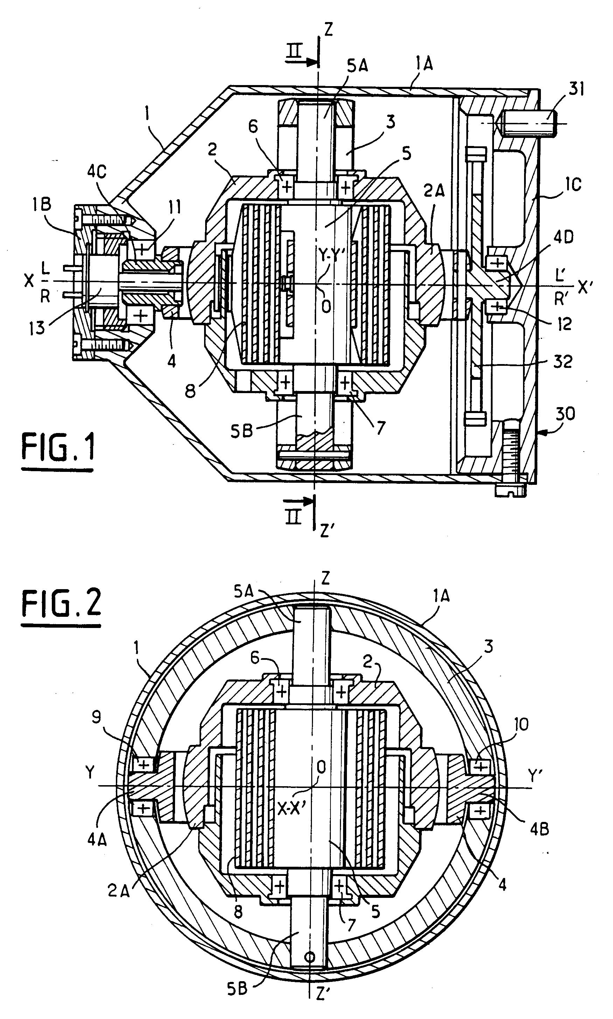

L'exemple de réalisation du système gyroscopique conforme à la présente invention, montré par les figures 1 et 2, comporte un boîtier 1 d'axe longitudinal L-L′, à l'intérieur duquel sont montés une toupie 2, un cadre primaire 3 et un cadre secondaire 4. Le boîtier 1 est constitué par une enveloppe 1A, obturable à ses extrémités par des couvercles d'extrémité 1B et 1C.

La toupie 2, dont le centre est désigné par O, est montée rotative autour d'un arbre 5, d'axe Z-Z′ destiné à fournir une référence de verticale. Les extrémités 5A et 5B de l'arbre 5 sont solidaires du cadre primaire 3. La toupie 2 peut tourner autour de l'arbre 5, grâce à des roulements, respectivement 6 et 7. Dans le mode de réalisation illustré sur les figures 1 et 2, on a supposé que la mise en rotation de la toupie 2 autour de l'arbre 5 était provoquée par un ressort à lame spiralée 8, comme cela est par exemple décrit dans le brevet américain US-A-4 709 586. Il va de soi que ce mode d'entraînement en rotation n'est pas essentiel pour l'invention et qu'il pourrait être remplacé par tout autre dispositif connu.

Le cadre secondaire 4 comporte des premiers moyeux opposés 4A et 4B, coopérant respectivement avec des roulements 9 et 10, solidaires du cadre primaire 3. Ainsi, le cadre primaire 3 peut pivoter, par rapport au cadre secondaire 4, autour d'un axe Y-Y′ rencontrant l'axe Z-Z′ au centre O. En outre, l'axe Y-Y′ est perpendiculaire à l'axe Z-Z′.

De plus, le cadre secondaire 4 comporte des seconds moyeux opposés 4C et 4D, coopérant respectivement avec des roulements 11 et 12, solidaires du boîtier 1, par exemple par l'intermédiaire des couvercles d'extrémité

1B ou 1C. Lesdits seconds moyeux 4C et 4D et les roulements 11 et 12 définissent, pour le cadre secondaire 4, un axe de rotation X-X′ par rapport au boîtier 1. L'axe X-X′ passe par le centre O et il est perpendiculaire à chacun des axes Z-Z′ et Y-Y′.

Le moyeu 4C est creux et il est traversé par un détecteur 13, solidaire du boîtier 1 et protégé par un boîtier 14. En regard du détecteur 13, la toupie 2 présente une partie périphérique sphérique 2A, centrée en O.

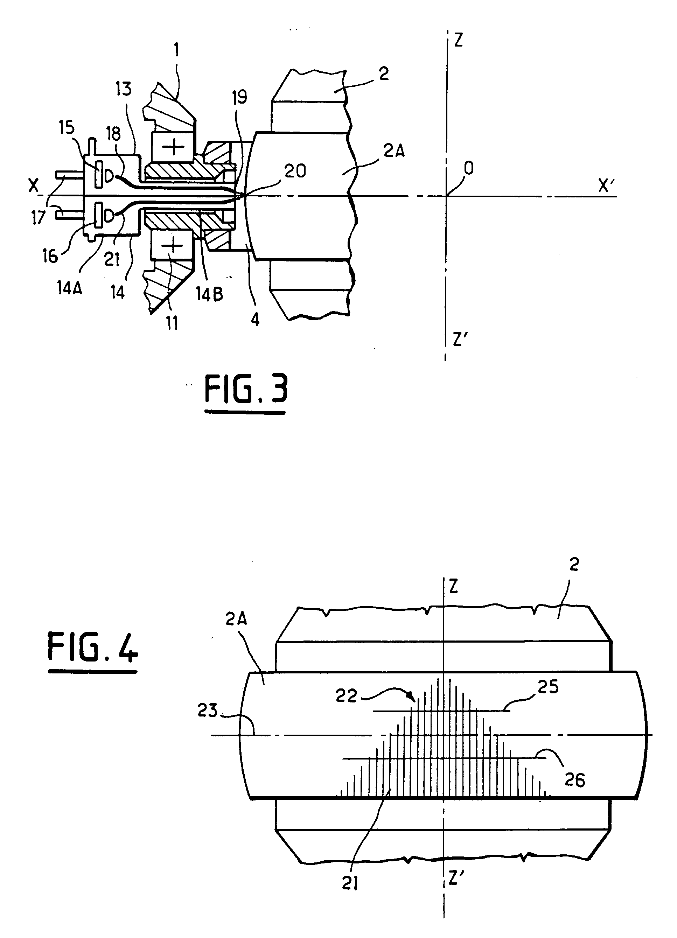

Comme le montre la figure 3, dans la partie 14A du boîtier 14 extérieure au palier 4C, le détecteur 13 comporte un dispositif photoémetteur 15, par exemple du type diode, et un dispositif photorécepteur 16, par exemple du type transistor. Les dispositifs photoémetteur 15 et photorécepteur 16 sont reliés à des broches de connexion électrique 17.

La lumière émise par le dispositif photoémetteur 15 est conduite par une fibre optique 18 jusqu'à l'extrémité 19 du détecteur 13, en regard de la partie sphérique 2A de la toupie 2. Sur cette partie sphérique 2A, la lumière émise par le dispositif photoémetteur 15 forme une tache lumineuse 20, pratiquement ponctuelle, dont le diamètre est par exemple inférieur à 80 µm, de préférence de l'ordre de 35 µm. La tache lumineuse 20 est observée par l'extrémité d'une autre fibre optique 21, qui conduit la lumière jusqu'au dispositif photorécepteur 16. Les fibres optiques 18 et 21 sont disposées dans une partie 14B du boîtier 14, traversant librement le palier 4C.

Par ailleurs, comme le montre la figure 4, la partie sphérique 2A de la toupie 2 porte une pluralité de traits équidistants 21, par exemple gravés, parallèles à l'axe Z-Z′. La longueur des traits 21 est progressivement croissante du bas vers le haut, puis progressivement décroissante, de sorte que l'ensemble des traits 21 forment une zone triangulaire 22.

Sur la figure 4, à des fins de simplification du dessin, on n'a représenté que 35 traits 21. Cependant, ce nombre est avantageusement plus élevé, par exemple égal à plusieurs centaines, de façon à assurer une bonne résolution au système gyroscopique de l'invention.

Par ailleurs, bien qu'un seul ensemble 22 de traits 21 soit représenté à la périphérie sphérique 2A de la toupie 2, il va de soi que la surface sphérique 2A pourrait comporter plusieurs ensembles 22, identiques ou différents, espacés le long de cette périphérie.

On comprendra que chaque trait 21 constitue une hétérogénéité de la surface sphérique 2A détectable par le photorécepteur 16, lorsque ledit trait passe, à cause de la rotation de la toupie 2, à travers la tache lumineuse 20.

Lorsque l'axe longitudinal L-L′ du boîtier 1 est confondu avec l'axe X-X′ du cadre secondaire 4, la tache lumineuse 20 se trouve en regard de la partie médiane du trait 21 médian le plus long. Ainsi, lorsque la toupie 1 tourne autour de son axe Z-Z′, la tache lumineuse 20 décrit sur la partie sphérique 2A une trace médiane 23 rencontrant un certain nombre de traits 21, qui, dans l'espace représenté, est égal à 19. Par suite, à chaque tour de la toupie 2 (si un seul ensemble 22 de traits 21 est prévu), le photorécepteur 16 reçoit alors 19 impulsions lumineuses 24 (voir la figure 5a).

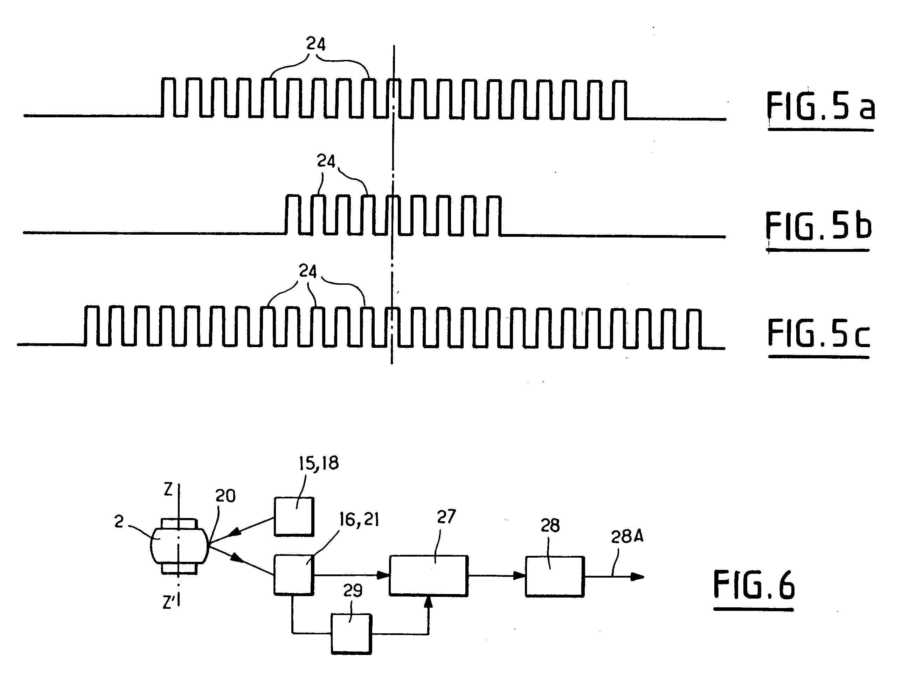

Si, maintenant, le boîtier 1 pivote autour de l'axe Y-Y′ dans le sens des aiguilles d'une montre, la tache lumineuse 20, dont la section reste identique à ce qu'elle était précédemment du fait de la forme sphérique de la partie 2A de la toupie 2, coupe la zone 22 selon une trace 25, différente de la trace 23. Dans ce cas, à chaque tour de la toupie 2, la trace 25 rencontre un nombre de traits 21 inférieur à 19, égal à 9 dans l'exemple représenté, de sorte que le photorécepteur 16 reçoit alors 9 impulsions 24 (voir la figure 5b).

En revanche, si le boîtier 1, à partir de la position pour laquelle les axes L-L′ et X-X′ sont confondus, pivote autour de l'axe Y-Y′ dans le sens inverse des aiguilles d'une montre, la tache lumineuse 20 coupe la zone 22 selon une trace 26, différente des traces 23 et 25, rencontrant un nombre de traits 21 supérieur à 19. Dans l'exemple représenté, ce nombre est égal à 25. Le photorécepteur 16 reçoit donc, à chaque tour de la toupie 2, 25 impulsions lumineuses 24 (voir la figure 5c).

On voit ainsi que :
- le nombre d'impulsions lumineuses reçues par le photorécepteur 16 est représentatif de l'amplitude angulaire du pivotement du boîtier 1 autour de l'axe Y-Y′, c'est-à-dire que l'on peut mesurer l'amplitude de ce pivotement par comptage des impulsions lumineuses reçues par le photorécepteur 16 ; et
- le sens du pivotement du boîtier 1 autour de l'axe Y-Y′ est donné par comparaison du nombre d'impulsions lumineuses reçues par le photorécepteur 16 avec le nombre de ces impulsions lumineuses engendrées lorsque les axes L-L′ et X-X′ sont confondus.

On remarquera que le système gyroscopique conforme à l'invention permet une bonne résolution, du fait que la tache lumineuse présente un très faible diamètre et qu'il est donc possible de prévoir des traits 21 très fins, très nombreux et peu espacés. Cette résolution peut être de l'ordre de 0,1°.

Sur la figure 6, on a illustré le schéma synoptique d'un exemple de réalisation du système gyroscopique conforme à la présente invention. On peut y voir que ce système comporte un compteur 27 recevant (par l'intermédiaire de certaines broches de connexion 17) les impulsions électriques émises par le photorécepteur 16 en réponse aux impulsions optiques 24. Le compteur 27 adresse le nombre compté à une table 28 qui, à sa sortie 28A, indique l'amplitude angulaire de l'inclinaison du plan X-X′, Y-Y′ par rapport à l'axe Z-Z′ et le sens de cette inclinaison. Dans la table 28 sont stockées, avec leur signe, les valeurs de cette amplitude angulaire en fonction du nombre de traits 21 rencontrés par la tache lumineuse 20. Le compteur 27 est commandé par un dispositif 29, qui lui-même reçoit des informations de la toupie 2 par l'intermédiaire de la fibre optique 21 et du photorécepteur 16. Par exemple, sur la surface sphérique 2A de la toupie 2, on peut prévoir en avant et en arrière de l'ensemble 22 des traits 21, des gravures spécifiques de commencement de comptage et de fin de comptage commandant le compteur 27 par l'intermédiaire du dispositif de commande 24. On peut également ne prévoir qu'une gravure de commencement de comptage. Dans ce cas, le dispositif 29 détermine, en fonction de la vitesse de rotation de la toupie 2, un temps de comptage maximal pour la totalité des traits 21 de l'ensemble 22.

Si la surface sphérique 2A ne comporte qu'un seul ensemble 22 de traits 21, le compteur 27 n'effectue qu'un seul comptage par tour de la toupie 2. En revanche, si la surface sphérique 2A comporte plusieurs ensembles 22 de traits 21, le compteur 27 effectue, à chaque tour de la toupie, autant de comptages qu'il y a d'ensembles 22.

Dans une application du système gyroscopique de l'invention, le boîtier 1 est fixé, par la face 30 de son couvercle 1C et grâce à des pions de centrage 31, sur un aéronef (non représenté), de façon que l'axe L-L′ dudit boîtier soit confondu avec l'axe de roulis R-R′ (voir la figure 1) dudit aéronef. Ainsi, à la sortie 28A, apparaît la valeur de l'inclinaison de l'axe de lacet dudit aéronef par rapport à l'axe Z-Z′ de la toupie 2. En effet, cet axe de lacet est alors perpendiculaire au plan X-X′, Y-Y′.

Il va de soi que, de façon analogue, le système gyroscopique de l'invention pourrait s'appliquer à la surveillance de l'axe de tangage.

Pour pouvoir de plus mesurer le roulis dudit aéronef, on peut prévoir une roue de détection 32 solidaire du cadre secondaire 4 et coaxiale à l'axe X-X′. Une telle roue de détection est bien connue dans la technique et elle coopère avec un détecteur approprié (connu et non représenté) pour donner la valeur de l'angle de roulis de l'aéronef.

## Revendications

1. Système gyroscopique comprenant :
- une toupie (2) ayant un centre (0) et susceptible d'être entraînée en rotation autour d'un premier axe (Z-Z') passant par ledit centre (0) ;
- un cadre primaire (3) sur lequel ladite toupie (2) est montée de façon à pouvoir tourner autour dudit premier axe (Z-Z') ;
- un cadre secondaire (4) sur lequel ledit cadre primaire (3) est monté de façon à pouvoir tourner autour d'un deuxième axe (Y-Y'), passant par ledit centre (0) de la toupie et perpendiculaire audit premier axe (Z-Z') ;
- un boîtier (1), à l'intérieur duquel sont logés ladite toupie et lesdits cadres primaire et secondaire et sur lequel ledit cadre secondaire (4) est monté de façon à pouvoir tourner autour d'un troisième axe (X-X'), passant par ledit centre (0) de la toupie et perpendiculaire audit deuxième axe (Y-Y') ;
- des moyens d'éclairement (15), solidaires dudit boîtier (1), prévus pour former une tache lumineuse (20) sur ladite surface extérieure sphérique (2A) de la toupie (2) ;
- des moyens photosensibles (16), solidaires dudit boîtier (1), prévus pour observer ladite tache lumineuse (20) formée par lesdits moyens d'éclairement (15) ;
- des zones de réflectivité différentes, formées par des traits équidistants (21) parallèles entre eux et audit premier axe et portées par la surface extérieure (2A) de ladite toupie (2) qui, au moins au voisinage du plan défini par lesdits deuxième et troisième axes (Y-Y' ; X-X') présente la forme d'une sphère centrée sur ledit centre (0) ; et
- des moyens de comptage (27), associés auxdits moyens photosensibles (16), prévus pour compter le nombre des traits (21) observés par lesdits moyens photosensibles (16) au cours de la rotation de la toupie (2), ledit nombre étant représentatif de l'inclinaison du plan défini par lesdits deuxième et troisième axes (Y-Y' ; X-X') par rapport audit premier axe (Z-Z'),
caractérisé en ce que :
- lesdits traits parallèles équidistants (21) forment au moins un ensemble (22) qui comporte au moins une partie dans laquelle la longueur desdits traits est successivement croissante et au moins une partie dans laquelle la longueur desdits traits est successivement décroissante ; et
- ledit ensemble (22) de traits parallèles (21) est disposé de façon que la partie médiane de celui desdits traits qui est le plus long se trouve au niveau de ladite tache lumineuse (20), lorsque le plan défini par les axes de rotation (Y-Y' et X-X') des cadres primaire et secondaire est perpendiculaire à l'axe de rotation (Z-Z') de la toupie (2), déterminant ainsi une position de référence, de sorte que la variation dudit nombre de traits (21) comptés par lesdits moyens de comptage (27), par rapport au nombre de traits correspondant à ladite position de référence, est représentative du sens d'inclinaison du plan desdits deuxième et troisième axes.

2. Système gyroscopique selon la revendication 1, dans lequel ledit cadre secondaire (4) est monté rotatif sur ledit boîtier (1) par l'intermédiaire de moyeux (4C,4D) définissant ledit troisième axe (X-X'),
caractérisé en ce qu'au moins l'un desdits moyeux est creux et en ce que l'éclairement de ladite surface extérieure sphérique (2A) par lesdits moyens d'éclairement (15), ainsi que l'observation de ladite tache lumineuse par lesdits moyens photosensibles (16) s'effectuent à travers un tel moyeu creux.

3. Système gyroscopique selon la revendication 2,
caractérisé en ce que lesdits moyens d'éclairement (15) et lesdits moyens photosensibles (16) sont regroupés en un unique détecteur (13) disposé en regard d'un tel moyen creux (4C).

4. Système gyroscopique selon la revendication 3,
caractérisé en ce que ledit détecteur (13) comporte un élément photoémetteur (15) et un élément photosensible (16) disposés à l'extérieur dudit moyeu creux (4C) et associés respectivement à des fibres optiques (18 et 21) passant à travers ledit moyeu creux (4C).

5. Système selon l'une des revendications 1 à 4,
caractérisé en ce que l'augmentation de longueur d'un trait (21) par rapport au précédent est constante.

6. Système gyroscopique selon l'une des revendications 1 à 5,
caractérisé en ce que la diminution de longueur d'un trait (21) par rapport au précédent est constante.

7. Utilisation du système gyroscopique selon l'une quelconque des revendications 1 à 6, destiné à détecter la position angulaire de l'axe de lacet ou de l'axe de tangage d'un aéronef par rapport à la verticale,
caractérisée en ce que ledit boîtier (1) est fixé sur ledit aéronef de façon que ledit troisième axe (X-X') de rotation du cadre secondaire (4) par rapport audit boîtier soit confondu avec l'axe de roulis (R-R') dudit aéronef.

## Claims

1. Gyroscopic system comprising:
- a rotor (2) having a centre (0) and capable of being driven in rotation about a first axis (Z-Z') passing through the said centre (0);
- a primary frame (3) on which the said rotor (2) is mounted so as to be able to turn about the said first axis (Z-Z');
- a secondary frame (4) on which the said primary frame (3) is mounted so as to be able to turn about a second axis (Y-Y'), passing through the said centre (0) of the rotor and perpendicular to the said first axis (Z-Z');
- a casing (1), inside which the said rotor and the said primary and secondary frames are housed and on which the said secondary frame (4) is mounted so as to be able to turn about a third axis (X-X'), passing through the said centre (0) of the rotor and perpendicular to the said second axis (Y-Y');
- illumination means (15), integral with the said casing (1), intended to form a light spot (20) on the said spherical outer surface (2A) of the rotor (2);
- photosensitive means (16), integral with the said casing (1), intended to observe the said light spot (20) formed by the said illumination means (15);
- different reflectivity regions, formed by equidistant lines (21) which are parallel to each other and to the said first axis and borne by the outer surface (2A) of the said rotor (2) which, at least in the vicinity of the plane defined by the said second and third axes (Y-Y'; X-X') has the shape of a sphere centred on the said centre (0); and
- counting means (27), associated with the said photosensitive means (16), intended to count the number of lines (21) observed by the said photosensitive means (16) during the rotation of the rotor (2), the said number being representative of the inclination of the plane defined by the said second and third axes (Y-Y'; X-X') with respect to the said first axis (Z-Z'), characterized in that:
- the said equidistant parallel lines (21) form at least one set (22) which includes at least a part in which the length of the said lines is successively increasing and at least a part in which the length of the said lines is successively decreasing;
- the said set (22) of parallel lines (21) is arranged such that the mid-part of the longest of the said lines is at the said light spot (20), when the plane defined by the axes of rotation (Y-Y' and X-X') of the primary and secondary frames is perpendicular to the axis of rotation (Z-Z') of the rotor (2), thus defining a reference position, such that the variation in the said number of lines (21) counted by the said counting means (27), with respect to the number of lines corresponding to the said reference position, is representative of the sense of inclination of the plane of the said second and third axes.

2. Gyroscopic system according to Claim 1, in which the said secondary frame (4) is rotationally mounted on the said casing (1) by means of hubs (4C, 4D) defining the said third axis (X-X'),
characterized in that at least one of the said hubs is hollow and in that the illumination of the said spherical outer surface (2A) by the said illumination means (15), as well as the observation of the said light spot by the said photosensitive means (16) takes place through such a hollow hub.

3. Gyroscopic system according to Claim 2, characterized in that the said illumination means (15) and the said photosensitive means (16) are combined in a single detector (13) arranged facing such a hollow hub (4C).

4. Gyroscopic system according to Claim 3, characterized in that the said detector (13) includes a photoemitter element (15) and a photosensitive element (16) which are arranged outside the said hollow hub (4C) and associated respectively with optical fibres (18 and 21) passing through the said hollow hub (4C).

5. System according to one of Claims 1 to 4, characterized in that the increase in length of one line (21) with respect to the preceding line is constant.

6. Gyroscopic system according to one of Claims 1 to 5, characterized in that the decrease in length of one line (21) with respect to the preceding line is constant.

7. Use of the gyroscopic system according to any one of Claims 1 to 6, intended to detect the angular position of the yaw axis or of the pitch axis of an aircraft with respect to the vertical, characterized in that the said casing (1) is fixed on the said aircraft such that the said third axis (X-X') of rotation of the secondary frame (4) with respect to the said casing coincides with the roll axis (R-R') of the said aircraft.

## Patentansprüche

1. Kreiselsystem mit:
- einem Kreisel (2) mit einem Mittelpunkt (O), der um eine erste, durch den Mittelpunkt (O) verlaufende Achse (Z-Z') in Drehung versetzt werden kann;
- einem Hauptrahmen (3), an dem der Kreise (2) so angebracht ist, daß er sich um die erste Achse (Z-Z') drehen kann;
- einem Nebenrahmen (4), an dem der Hauptrahmen (3) so angebracht ist, daß er sich um eine zweite Achse (Y-Y') drehen kann, die durch den Mittelpunkt (O) des Kreises senkrecht zur ersten Achse (Z-Z') verläuft;
- einem Gehäuse (1), in dem der Kreisel und der Haupt- und Nebenrahmen gelagert sind und an dem der Nebenrahmen (4) so angeordnet ist, daß er sich um eine dritte Achse (X-X') drehen kann, die durch den Mittelpunkt (O) des Kreises senkrecht zur zweiten Achse (Y-Y') verläuft;
- Beleuchtungsmitteln (15), die mit dem Gehäuse (1) verbunden sind und auf der kugelförmigen Außenfläche (2A) des Kreisels (2) einen Lichtfleck (20) bilden;
- lichtempfindlichen Mitteln (16), die mit dem Gehäuse (1) verbunden sind und den von den Beleuchtungsmitteln (15) gebildeten Lichtfleck (20) erfassen;
- unterschiedlichen Reflexionszonen, die aus abstandsgleichen, parallel zueinander und zur ersten Achse verlaufenden Strichen (21) auf der Außenfläche (2A) des Kreisels (2) bestehen, die zumindest in der Nähe der von der zweiten und dritten Achse (Y-Y'; X-X') bestimmten Ebene die Form einer auf den Mittelpunkt (O) ausgerichteten Kugel hat; und
- Zählmitteln (27), die den lichtempfindlichen Mitteln (16) zugeordnet sind, zum Zählen der Anzahl der von den lichtempfindlichen Mitteln (16) während der Rotation des Kreises (2) erfaßten Striche (21), wobei die Anzahl repräsentativ für die Neigung der von der zweiten und dritten Achse (Y-Y'; X-X') bestimmten Ebene zur ersten Achse (Z-Z') ist,
dadurch gekennzeichnet, daß:
- die parallelen abstandsgleichen Striche (21) mindestens einen Komplex (22) bilden, der mindestens einen Teil hat, in dem die Länge der Striche nacheinander zunimmt und mindestens einen Teil, in dem die Länge der Striche nacheinander abnimmt; und
- der Komplex (22) paralleler Striche (21) so angeordnet ist, daß der mittlere Teil des längsten Strichs im Bereich des Lichtflecks (20) liegt, wenn die von den Rotationsachsen (Y-Y' und X-X') des Haupt- und Nebenrahmens gebildete Ebene senkrecht zur Rotationsachse (Z-Z') des Kreises (2) verläuft und so eine Bezugsposition bestimmt, so daß die Änderung der Anzahl der von den Zählmitteln (27) gezählten Striche (21) im Vergleich zu der Anzahl von Strichen, die der Bezugsposition entspricht, für die Neigungsrichtung der Ebene der zweiten und dritten Achse repräsentativ ist.

2. Kreiselsystem nach Anspruch 1, bei dem der Nebenrahmen (4) über Naben (4C,4D), die die dritte Achse (X-X') bilden, drehbar am Gehäuse (1) angebracht ist,
dadurch gekennzeichnet, daß mindestens eine der Naben hohl ist, und dadurch, daß die Beleuchtung der kugelförmigen Außenfläche (2A) durch die Beleuchtungsmittel (15) sowie die Erfassung des Lichtflecks durch die lichtempfindlichen Mittel (16) über eine solche Hohlnabe erfolgen.

3. Kreiselsystem nach Anspruch 2,
dadurch gekennzeichnet, daß die Beleuchtungsmittel (15) und die lichtempfindlichen Mittel (16) zu einem einzigen Detektor (13) zusammengefaßt sind, der gegenüber einer solchen Hohlnabe (4C) angeordnet ist.

4. Kreiselsystem nach Anspruch 3,
dadurch gekennzeichnet, daß der Detektor (13) ein Photoemissionselement (15) und ein lichtempfindliches Element (16) hat, die außerhalb der Hohlnabe (4C) angeordnet und Glasfasern (18 bzw. 21) zugeordnet sind, die durch die Hohlnabe (4C) verlaufen.

5. System nach einem der Ansprüche 1 bis 4,
dadurch gekennzeichnet, daß der Längenzuwachs eines Strichs (21) gegenüber dem vorangegangenen Strich konstant ist.

6. Kreiselsystem nach einem der Ansprüche 1 bis 5,
dadurch gekennzeichnet, daß die Längenabnahme eines Strichs (21) gegenüber dem vorangegangenen Strich konstant ist.

7. Einsatz des Kreiselsystems nach einem der Ansprüche 1 bis 6 zur Erfassung der Winkelposition der Gierachse oder der Nickachse eines Luftfahrzeugs gegenüber der Vertikalen,
dadurch gekennzeichnet, daß das Gehäuse (1) am Luftfahrzeug so befestigt ist, daß die dritte Rotationsachse (X-X') des Nebenrahmens (4) gegenüber dem Gehäuse mit der Rollachse (R-R') des Luftfahrzeugs zusammenfällt.
